# EUROPEAN PATENT SPECIFICATION

(11) **EP 3 982 003 B1**
(45) Date of publication and mention of the grant of the patent: **02.08.2023**
(21) Application number: 20200875.1
(22) Date of filing: 08.10.2020
(51) Int. Cl.: F16F 9/04, F16F 9/05, B60G 11/27

(54) **AIR SPRING**
LUFTFEDER
RESSORT PNEUMATIQUE

(43) Date of publication of application: 13.04.2022
(73) Proprietor: ContiTech AG, 30165 Hannover (DE)
(72) Inventor: Janhar, Ziga, 30419 Hannover (DE); Heberle, Peter, 30419 Hannover (DE); Kosir, Matej, 30419 Hannover (DE); Stojko, Brane, 30419 Hannover (DE); Bosch-Masgrau, Francesc, 30419 Hannover (DE); Hansen, Carsten, 30419 Hannover (DE); Oman, Simon, 30419 Hannover (DE); Duman, Güray, 30419 Hannover (DE); Hornyak, Laszlo, 30419 Hannover (DE); Szlavik, Tamas, 30419 Hannover (DE)
(74) Representative: Continental Corporation

(56) References cited:
- DE-A1-102008 017 703
- US-A- 5 346 187
- US-B1- 6 386 524

## Description

The invention relates to an air spring with an air spring rolling bellows made of elastomer material with reinforcing layers embedded within the rolling bellows wall, the air spring being clamped in between a sprung and an unsprung mass, in accordance with the preamble of claim 1. An example of such an air spring is disclosed by US 5,346,187 A.

### Prior art

The use of air springs in vehicles is nowadays customary for reasons of the ride comfort and of the adjustable large travel stroke and is in particular the norm in the case of buses and lorries. Acceptance has finally been gained here of rolling bellows/tubular rolling bellows which have multilayer and possibly reinforced walls made of elastomer materials and which are fixedly connected or clamped at their ends to connection parts made of metal or plastic. These are customarily, on the one hand, an air spring cover and, on the other hand, an air spring piston on which the air spring bellows can roll in operation, that is to say during compression and extension, with the formation of a rolling fold.

The air spring cover is as a rule connected to the vehicle body, that is to say the sprung mass, whereas the air spring piston is fastened to the chassis, that is to say to the unsprung mass. The air springs are connected to an air supply, customarily by means of hoses and/or air lines which, via corresponding connections and valves for air delivery and control on the air spring cover, are connected to the working space or pressure space within the air spring bellows. The air is supplied by way of a pressure accumulator located in the vehicle, which is filled by means of a compressor and then provides the supply of air for the individual sprung systems by way of a controller. The air-spring controller is often incorporated in the rest of the vehicle control system.

**The** connection parts and the air spring bellows thus enclose the working space which is under internal pressure and contains the air spring volume and which is connected to the air connection which is often provided in the cover.

US 6,386,524 B1 discloses an air spring in which the customarily present construction of the connection between the air spring bellows and the connection parts becomes clear. Whereas the connection to the air spring cover occurs by crimping or flanging a bead ring formed at the upper end of the air spring bellows and having an inserted core wire, the connection to the rolling piston, which is here formed from plastic, is provided such that the lower end of the air spring bellows, said lower end being provided with a further bead ring, is pushed or pressed merely with a fit onto a seat, which is complementary thereto, of the piston.

**The** connection shown there between the air spring bellows and the piston disadvantageously requires complicated precisely tailored machining of the sealing surfaces and of the connection cross section on the piston and, on the other hand, is not secure during lifting of the vehicle since the piston can be pulled off the air spring bellows.

**To** date, for the rolling movement, air springs with a rolling bellows thus require an air spring piston which is to be produced separately, that is to say a pot-shaped or cylindrical, dimensionally stable and rigid body whose cylindrical walls extend in a longitudinal direction of the rolling bellows, such that, during operation, the rolling bellows can roll on the outside of the walls, with the formation of a rolling fold.

### Problem addressed by the invention

The object of the present invention was accordingly to provide an air spring of simplified construction, in the case of which it is possible to dispense with a separate rolling piston and thus a separate production of rolling pistons can be omitted, in the case of which the connection between the rolling bellows and the rolling piston, and thus fits with narrow tolerances in the connecting region, can also be omitted, and with which the assembly and the construction of chassis are simplified.

### Solution to the problem

This problem is solved by the features of the main claim. Further advantageous embodiments are disclosed in the dependent claims.

In this case, the rolling bellows comprises, within its wall at a first bellows end, a tubular or cylindrical wall reinforcement which extends in a longitudinal direction of the rolling bellows and which is formed in addition to the customary reinforcing layers provided for the bellows wall, said wall reinforcement extending over an end-side partial length of the rolling bellows and imparting such a dimensional stability to the rolling bellows there that, during operation, the rolling bellows rolls, by way of its wall parts located outside of the additional wall reinforcement, on the outer side of the end-side partial length, with the formation of a rolling fold.

By virtue of the inventive configuration of the rolling bellows in an air spring, as it were a rolling bellows with an "integrated piston" is provided in that specifically a partial region of the rolling bellows is configured in a dimensionally stable and cylindrical manner as a result of additional reinforcements and thus can assume the functions which traditionally and in the prior art are assumed by the rolling piston. Indeed, savings are thus made on components, their production and their transport, without adversely affecting the function of the air spring as rolling bellows spring.

A major advantage during the assembly is naturally that the air spring bellows can be delivered to its place of use in a ready-to-install state and can be assembled there without the need to first establish a connection to a separate air spring piston. The air spring with the air spring bellows can thus be inserted into the chassis without further assembly steps and needs only to be correspondingly fastened to the connection parts.

In accordance with the invention, the additional wall reinforcement of the rolling bellows is composed of one or more tubular or cylindrical layers of reinforcing material, which form a sandwich structure with the material of the rolling bellows. The individual layers of reinforcing material are arranged on the inner side of the rolling bellows wall.

An advantageous configuration consists in that the tubular or cylindrical layers of reinforcing material are layered into one another. Such a construction of cylinders layered into one another produces a particularly dimensionally stable and robust configuration of the relevant end region, that is to say the end-side partial length of the rolling bellows. With such a configuration, approximately the same dimensional stability is achieved on the rolling surface as could be provided by an air spring piston made of steel.

A further advantageous configuration consists in that the additional wall reinforcement of the rolling bellows is formed of fiber materials, for instance glass fibers, carbon fibers or synthetic fibers, or is formed of composite materials reinforced with such fibers. As a result of corresponding arrangement and layering, it is possible to form any desired material strength or dimensional stability in a simple manner.

A further advantageous configuration consists in that the rolling bellows is configured in the form of a tubular rolling bellows and is closed at one or both ends with an air spring cover or air spring base. Preferably, use is made of metallic covers or bases here, however covers or bases made of plastic have also already been tried. A lightweight construction with plastics materials is desired in many sectors. With said add-on parts, the air spring is ready to install and can be assembled with cover and base and connected to the air supply.

An advantageous further configuration of the invention consists in that the rolling bellows is configured in the form of a tubular rolling bellows and is closed at its second bellows end, which lies opposite the additional wall reinforcement, with an air spring cover, and, in said bellows, the additional wall reinforcement, at the first bellows end and proceeding from the circumference of the rolling bellows, continues in a radially inward direction in a pot-like manner and forms an air spring base, the entire sandwich structure preferably continuing in a radially inward direction.

Since the additional reinforcements can be produced in any form, particularly if they are formed of layer materials or composite materials, it is thus also possible to use them to close the air spring bellows for example on its lower side. This is possible in that a pot-like configuration results only in one fastening edge, to which further components, for example a simple base plate, can be connected. However, it is equally possible for the base itself to be produced from the composite material or from the layer materials.

The air spring according to the invention, on account of its simple and integrated construction and its easy assembly, is particularly suitable for chassis of a car or commercial vehicle.

### Exemplary embodiment / Detailed description of the invention

The invention will be explained in more detail on the basis of an exemplary embodiment. In the figures:
- fig. 1: shows an air spring according to the invention for a heavy goods vehicle in the extended state, in cross section,
- fig. 2: shows the air spring as shown in fig. 1 in the compressed position/in the operating state, in cross section,
- figs. 3 - 5: show an air spring not according to the invention with an additional wall reinforcement made of glass fiber materials,
- fig. 6: shows an air spring from the prior art with separate rolling piston for comparison,
- fig. 7: shows another air spring not according to the invention.

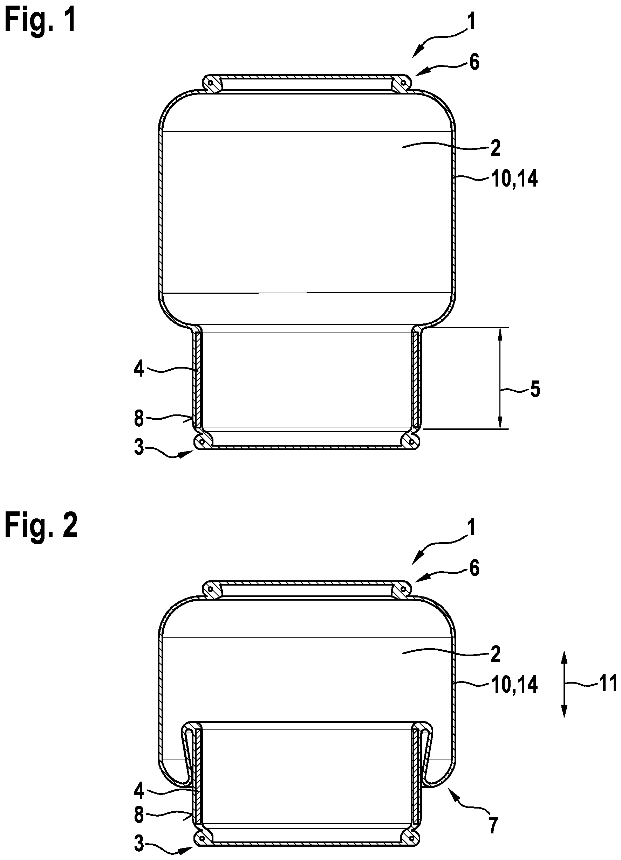

Fig. 1 shows an air spring 1 according to the invention for a heavy goods vehicle having a rolling bellows 2 made of elastomer material in the extended state, in cross section. The air spring is customarily clamped in between a sprung and an unsprung mass, namely between the body of the heavy goods vehicle and the associated chassis. Sprung and unsprung masses, that is to say the body and chassis, are not illustrated in more detail here in order to keep the exemplary embodiment as clear as possible and to illustrate only essential features of the invention.

**The** rolling bellows 2 configured in the form of a tubular rolling bellows comprises, at its lower bellows end 3, within its wall, a tubular or cylindrical wall reinforcement 4 which extends in a longitudinal direction of the rolling bellows and which is formed in addition to the "customary" reinforcing layers which, for the sake of clarity, are not illustrated in any more detail here in figs. 1 and 2, said wall reinforcement extending over an end-side partial length 5 of the rolling bellows. Said partial length 5 corresponds approximately to the customary height of a rolling piston from the prior art.

Fig. 2 shows the same air spring from fig. 1 for a heavy goods vehicle in the compressed position, that is to say in an operating state, in cross section. The tubular or cylindrical wall reinforcement 4 extending over the end-side partial length 5 of the rolling bellows imparts such a dimensional stability to the rolling bellows there that, during operation, the rolling bellows 2 rolls, by way of its wall parts 10 located outside of the additional wall reinforcement, on the outer surface 8 of the end-side partial length 5, with the formation of a rolling fold 7. The compression and extension of the air spring 1 during operation is illustrated here by the movement arrow 11.

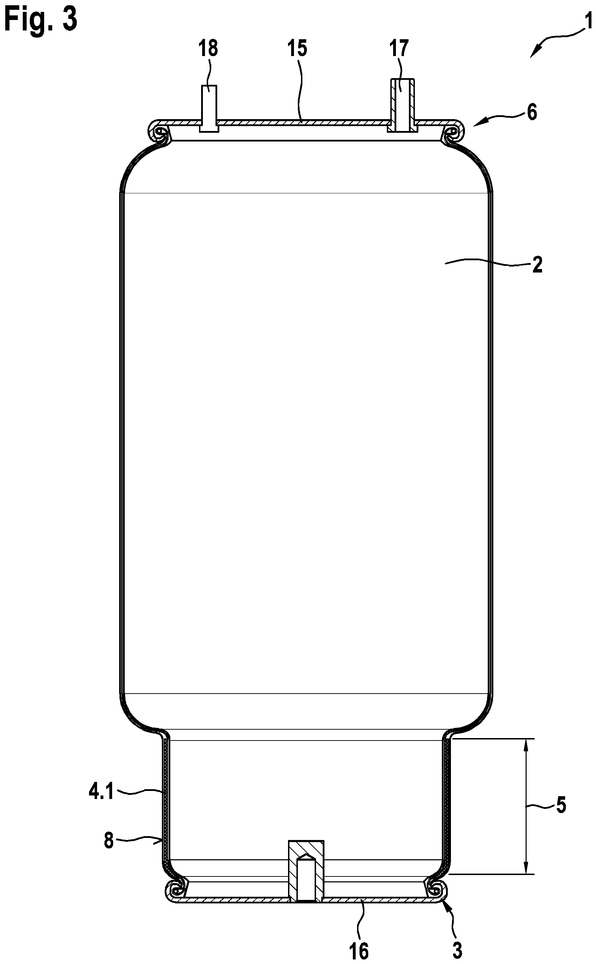

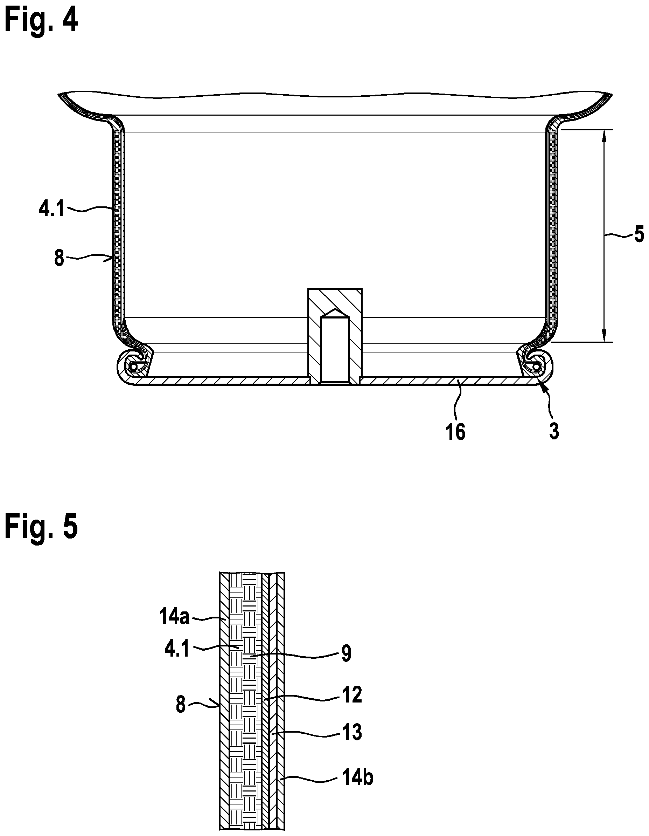

Fig. 3 shows, in conjunction with figs. 4 and 5, an air spring 1 in which a braided fabric 9 made of glass fiber materials is provided as additional wall reinforcement 4.1 of the rolling bellows 2, said braided fabric being configured on the outside of the customary reinforcing layers 12, 13, which are configured as woven fabric layers, and forming a composite material with the elastomer material of the bellows wall, including the elastomer layers 14a (top layer) and 14b (airtight inner layer / inner liner). The rolling bellows 2 is configured in the form of a tubular rolling bellows and is closed at both ends, namely at its upper end 6 with a metallic air spring cover 15 and at its lower end 3 with a metallic air spring base 16. The air connection 17, and also an ultrasound sensor 18 for measuring the height of the air spring, is also located in the air spring cover 15.

In this case, fig. 4 shows an enlarged sectional illustration of the lower part of the air spring illustrated in fig. 3. Figure 5 shows an enlarged illustration of the wall construction of an air spring as shown in figure 3 and figure 4.

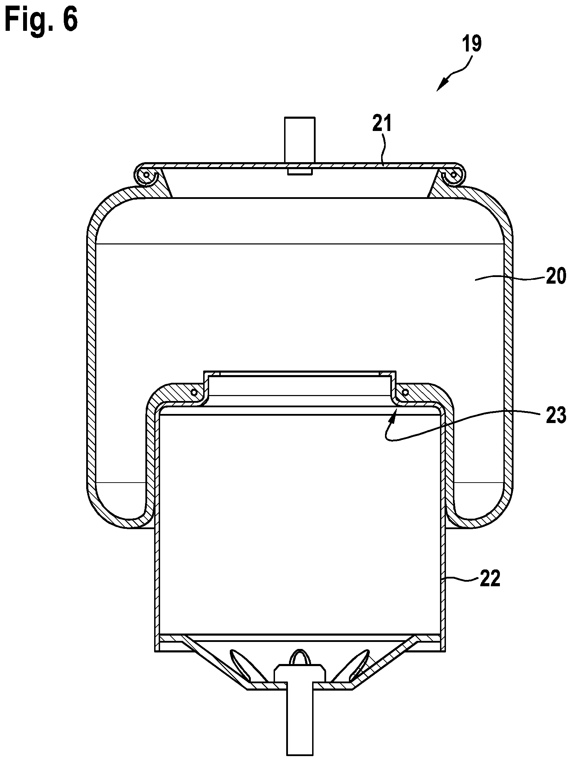

Fig. 6 shows, for comparison, an air spring 19 in cross section, as is customary in the prior art. The air spring 18 is composed substantially of an air spring bellows 20 which is connected to a cover 21 fastened at the upper end of said air spring bellows and to a separately produced air spring piston or rolling piston 22 fastened at the lower end of said air spring bellows. Whereas the connection to the air spring cover occurs by flanging a bead ring formed at the upper end of the air spring bellows and having an inserted core wire, the connection to the rolling piston 22 is provided such that the lower end of the air spring bellows, said lower end being provided with a further bead ring, is pushed merely with a fit onto a rolling bellows seat 23, which is complementary thereto, of the piston 22. Both the outlay for producing separate parts (air spring bellows and rolling piston) and the outlay for assembly and installation are significantly greater in the case of such an air spring from the prior art than in the case of the solution according to the invention.

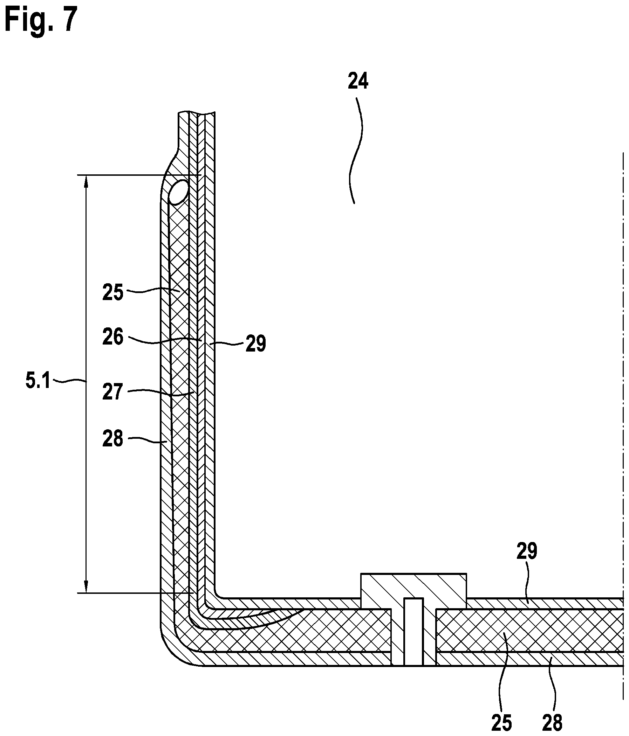

Fig. 7 shows the lower part of a rolling bellows 24 of an air spring in half-section, with its end-side partial length 5.1, the rolling bellows also being configured here in the form of a tubular rolling bellows and being closed at its bellows end, which lies opposite the additional wall reinforcement 25 and which is not illustrated in any more detail here, with an air spring cover which is likewise not shown here.

In the lower part of the rolling bellows 24 shown here, the additional wall reinforcement 25, at the first bellows end and proceeding from the circumference of the rolling bellows, continues in a radially inward direction in a pot-like manner and thus forms an air spring base. In this case, the customary reinforcing layers 26, 27 which are configured as woven fabric layers also continue in a radially inward direction over a short base region. The elastomer material of the bellows wall, namely the top layer 28 and the airtight inner layer / the inner liner 29, likewise continues into the base region and there forms a sandwich material with the additional wall reinforcement.

### List of reference designations

### (Part of the description)

- 1: Air spring
- 2: Rolling bellows, air spring rolling bellows, tubular rolling bellows
- 3: Lower bellows end of the rolling bellows, first bellows end
- 4: Additional wall reinforcement
- 4.1: Additional wall reinforcement made of glass fiber braided fabric
- 5: End-side partial length of the rolling bellows, rolling region
- 5.1: End-side partial length of the rolling bellows, rolling region
- 6: Upper, second bellows end
- 7: Rolling fold
- 8: Outer surface of the end-side partial length, rolling face
- 9: Glass fiber braided fabric
- 10: Wall outside of the additional wall reinforcement
- 11: Spring movement during compression and extension in operation
- 12: Reinforcing layer / reinforcing woven fabric of customary type
- 13: Reinforcing layer / reinforcing woven fabric of customary type
- 14: Elastomer matrix
- 14a: Outer top layer of the air spring bellows wall
- 14b: Inner airtight layer of the air spring bellows wall
- 15: Air spring cover
- 16: Air spring base
- 17: Air connection
- 18: Ultrasound sensor
- 19: Air spring (prior art)
- 20: Air spring bellows (prior art)
- 21: Air spring cover (prior art)
- 22: Air spring piston / rolling piston (prior art)
- 23: Rolling bellows seat on the piston (prior art)
- 24: Air spring bellows
- 25: Additional wall reinforcement
- 26: Customary reinforcing layer
- 27: Customary reinforcing layer
- 28: Top layer (elastomer)
- 29: Airtight inner layer

## Claims

1. An air spring (1) with an air spring rolling bellows (2) made of elastomer material with reinforcing layers embedded within the rolling bellows wall, the air spring being clamped in between a sprung and an unsprung mass, the rolling bellows (2) comprises, within its wall at a first bellows end (3), a tubular or cylindrical wall reinforcement (4, 4.1, 25) which extends in a longitudinal direction of the rolling bellows (2) and which is formed in addition to the reinforcing layers, said wall reinforcement extending over an end-side partial length (5) of the rolling bellows (2) and imparting such a dimensional stability to the rolling bellows there that, during operation, the rolling bellows (2) rolls, by way of its wall parts (10) located outside of the additional wall reinforcement, on the outer surface (8) of the end-side partial length (5), with the formation of a rolling fold (7),wherein the additional wall reinforcement (4, 4.1, 25) of the rolling bellows (2) is composed of one or more tubular or cylindrical layers of reinforcing material (9), which form a sandwich structure with the material (14a, 14b, 28, 29) of the rolling bellows, **characterized in that** the individual layers of reinforcing material (9) are arranged on the inner side of the rolling bellows wall.

2. The air spring as claimed in claim 1, in which the tubular or cylindrical layers of reinforcing material (9) are layered into one another.

3. The air spring as claimed in one of claims 1 to 2, in which the additional wall reinforcement of the rolling bellows (2) is formed of fiber materials (9) or fiber-reinforced composite materials.

4. The air spring as claimed in one of claims 1 to 3, in which the rolling bellows (2) is configured in the form of a tubular rolling bellows and is closed at one or both ends (3, 6) with an air spring cover (15) or air spring base (16).

5. The air spring as claimed in one of claims 1 to 4, in which the rolling bellows (2) is configured in the form of a tubular rolling bellows and is closed at its second bellows end (6), which lies opposite the additional wall reinforcement, with an air spring cover, and, in said bellows, the additional wall reinforcement (25), at the first bellows end and proceeding from the circumference of the rolling bellows, continues in a radially inward direction in a pot-like manner and forms an air spring base, the entire sandwich structure preferably continuing in a radially inward direction.

6. A chassis of a car or commercial vehicle having an air spring as claimed in one of claims 1 to 5.

## Patentansprüche

1. Luftfeder (1) mit einem Luftfeder-Rollbalg (2) aus Elastomermaterial mit in die Rollbalgwand eingebetteten Verstärkungsschichten, wobei die Luftfeder zwischen eine gefederte und eine ungefederte Masse eingespannt ist, wobei der Rollbalg (2) in seiner Wand an einem ersten Balgende (3) eine rohrförmige oder zylindrische Wandverstärkung (4, 4.1, 25) aufweist, die sich in einer Längsrichtung des Rollbalgs (2) erstreckt und die zusätzlich zu den Verstärkungsschichten gebildet ist, wobei sich die Wandverstärkung über eine endseitige Teillänge (5) des Rollbalgs (2) erstreckt und dem Rollbalg dort eine derartige Formstabilität verleiht, dass während eines Betriebs der Rollbalg (2) mittels seiner Wandteile (10), die sich außerhalb der zusätzlichen Wandverstärkung befinden, auf der Außenfläche (8) der endseitigen Teillänge (5) unter Bildung einer Rollfalte (7) abrollt, wobei die zusätzliche Wandverstärkung (4, 4.1, 25) des Rollbalgs (2) aus einer oder mehreren rohrförmigen oder zylindrischen Schichten aus Verstärkungsmaterial (9) besteht, die eine Sandwichstruktur mit dem Material (14a, 14b, 28, 29) des Rollbalgs bilden, **dadurch gekennzeichnet, dass** die einzelnen Schichten aus Verstärkungsmaterial (9) auf der Innenseite der Rollbalgwand angeordnet sind.

2. Luftfeder nach Anspruch 1, wobei die rohrförmigen oder zylindrischen Schichten aus Verstärkungsmaterial (9) ineinander geschichtet sind.

3. Luftfeder nach einem der Ansprüche 1 bis 2, wobei die zusätzliche Wandverstärkung des Rollbalgs (2) aus Fasermaterial (9) oder faserverstärkten Verbundmaterialien gebildet ist.

4. Luftfeder nach einem der Ansprüche 1 bis 3, wobei der Rollbalg (2) in der Form eines rohrförmigen Rollbalgs ausgebildet ist und an einem oder beiden Enden (3, 6) mit einer Luftfederabdeckung (15) oder Luftfederbasis (16) verschlossen ist.

5. Luftfeder nach einem der Ansprüche 1 bis 4, wobei der Rollbalg (2) in der Form eines rohrförmigen Rollbalgs ausgebildet ist und an seinem zweiten Balgende (6), das der zusätzlichen Wandverstärkung gegenüberliegt, mit einer Luftfederabdeckung verschlossen ist, und wobei in dem Balg die zusätzliche Wandverstärkung (25) an dem ersten Balgende und sich fortsetzend vom Umfang des Rollbalgs in einer Richtung radial nach innen in einer topfartigen Weise verläuft und eine Luftfederbasis bildet, wobei die gesamte Sandwichstruktur vorzugsweise in einer Richtung radial nach innen verläuft.

6. Chassis eines Kraftfahrzeugs oder Nutzfahrzeugs, das eine Luftfeder nach einem der Ansprüche 1 bis 5 aufweist.

## Revendications

1. Ressort pneumatique (1) comportant un soufflet roulant (2) de ressort pneumatique composé d'un matériau élastomère comportant des couches de renforcement incorporées dans la paroi du soufflet roulant, le ressort pneumatique étant fixé entre une masse suspendue et une masse non suspendue, le soufflet roulant (2) comprenant, à l'intérieur de sa paroi à une première extrémité de soufflet (3), un renfort de paroi tubulaire ou cylindrique (4, 4.1, 25) qui s'étend dans une direction longitudinale du soufflet roulant (2) et qui est formé en plus des couches de renforcement, ledit renfort de paroi s'étendant sur une longueur partielle côté extrémité (5) du soufflet roulant (2) et conférant une stabilité dimensionnelle au soufflet roulant à cet endroit telle que, pendant l'utilisation, le soufflet roulant (2) roule, par le biais de ses parties de paroi (10) situées à l'extérieur du renfort de paroi supplémentaire, sur la surface extérieure (8) de la longueur partielle côté extrémité (5), avec la formation d'un pli roulant (7), le renfort de paroi supplémentaire (4, 4.1, 25) du soufflet roulant (2) étant composé d'une ou de plusieurs couches de matériau de renforcement (9) tubulaires ou cylindriques, qui forment une structure en sandwich avec le matériau (14a, 14b, 28, 29) du soufflet roulant, **caractérisé en ce que**
les couches individuelles de matériau de renforcement (9) sont placées sur le côté intérieur de la paroi du soufflet roulant.

2. Ressort pneumatique selon la revendication 1, dans lequel les couches de matériau de renforcement (9) tubulaires ou cylindriques sont superposées les unes dans les autres.

3. Ressort pneumatique selon l'une des revendications 1 et 2, dans lequel le renfort de paroi supplémentaire du soufflet roulant (2) est composé de matériaux fibreux (9) ou de matériaux composites renforcés avec des fibres.

4. Ressort pneumatique selon l'une des revendications 1 à 3, dans lequel le soufflet roulant (2) est réalisé sous la forme d'un soufflet roulant tubulaire et est fermé à l'une de ses extrémités (3, 6) ou aux deux par un chapeau de ressort pneumatique (15) ou une base de ressort pneumatique (16).

5. Ressort pneumatique selon l'une des revendications 1 à 4, dans lequel le soufflet roulant (2) est réalisé sous la forme d'un soufflet roulant tubulaire et est fermé à sa seconde extrémité de soufflet (6), qui est située à l'opposé du renfort de paroi supplémentaire, avec un chapeau de ressort pneumatique et, dans ledit soufflet, le renfort de paroi supplémentaire (25), à la première extrémité de soufflet et en partant de la circonférence du soufflet roulant, continue dans une direction allant radialement vers l'intérieur à la façon d'un pot et forme une base de ressort pneumatique, la structure en sandwich entière continuant, de préférence, dans une direction allant radialement vers l'intérieur.

6. Châssis d'une voiture ou d'un véhicule commercial comportant un ressort pneumatique selon l'une des revendications 1 à 5.
